# EUROPEAN PATENT APPLICATION

(11) **EP 1 647 561 A2**
(43) Date of publication of application: **19.04.2006**
(21) Application number: 05022518.4
(22) Date of filing: 14.10.2005
(51) Int. Cl.: C08G 18/02, C08G 18/79, C08G 18/71, C08L 79/08

(54) **Polycarbodiimide compositions for optical use**

(30) Priority: 14.10.2004 JP 2004300681
(71) Applicant: NITTO DENKO CORPORATION, Osaka (JP)
(72) Inventor: Uwada, Kazuki, Ibarashi-shi Osaka (JP); Hotta, Yuji, Ibarashi-shi Osaka (JP)
(74) Representative: Grünecker, Kinkeldey, Stockmair & Schwanhäusser Anwaltssozietät

(57) **Abstract**

The present invention provides a resin composition for optical use which comprises a phenolic compound and a polycarbodiimide represented by the following general formula (1): 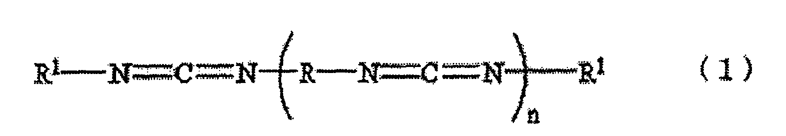 wherein R represents a diisocyanate residue, R¹ represents a monoisocyanate residue, and n is an integer of 1 to 100, wherein the phenolic compound has a substituent at at least one of the ortho positions to its phenolic hydroxyl group. Also disclosed are a resin sheet for obtained from the resin composition and an optical semiconductor device using the resin composition or the resin sheet.

## Description

### FIELD OF THE INVENTION

The present invention relates to an optical resin composition for use in the optical field.

### BACKGROUND OF THE INVENTION

A resin for encapsulation of optical semiconductor elements, which comprises a polycarbodiimide for the purpose of maintaining the high luminance of luminescent elements, has been reported (see, for example, patent document 1).

### Patent Document 1: JP 2004-238441 A

However, the polycarbodiimide solution which is used in preparing the resin for optical use has poor storage stability and is hence undesirable for industrial use.

### SUMMARY OF THE INVENTION

Accordingly, an object of the invention is to provide a resin composition for optical use which has excellent storage stability.

Other objects and effects of the invention will become apparent from the following description.

The invention relates to:
[1] A resin composition for optical use which comprises a phenolic compound and a polycarbodiimide represented by the following general formula (1): 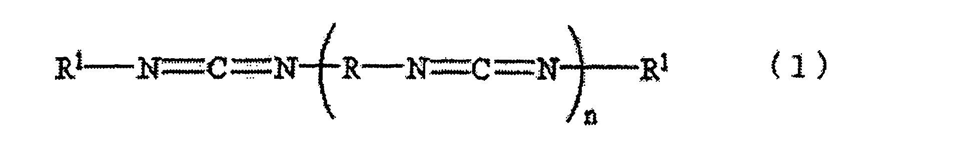 wherein R represents a diisocyanate residue, R¹ represents a monoisocyanate residue, and n is an integer of 1 to 100,
   wherein the phenolic compound has a substituent at at least one of the ortho positions with respect to its phenolic hydroxyl group;
[2] A resin sheet for optical use obtained by forming the resin composition for optical use as described in item [1] above into a sheet form; and
[3] An optical semiconductor device produced by encapsulating one or more optical semiconductor elements with the resin composition for optical use as described in item [1] above or the resin sheet for optical use as described in item [2] above.

According to the invention, a resin composition for optical use which has excellent storage stability can be provided.

### DETAILED DESCRIPTION OF THE INVENTION

As a result of extensive investigations, the present inventors have found that the poor storage stability which has been a problem in the preparation of the conventional resin is improved by mixing a solution of a specific polycarbodiimide with a specific phenolic compound. The invention has been achieved based on this finding.

One major feature of the resin composition for optical use of the invention resides in that it comprises a phenolic compound and a polycarbodiimide represented by general formula (1) and that the phenolic compound has a substituent at at least one of the ortho positions with respect to its phenolic hydroxyl group.

The polycarbodiimide to be contained in the resin composition for optical use of the invention is obtained by subjecting one or more diisocyanates to a condensation reaction and blocking the terminals of the polymer with a monoisocyanate.

In general formula (1), R represents a residue of the diisocyanate used as a starting material and R¹ represents a residue of the monoisocyanate used as another starting material. The symbol n, which indicates the average degree of polymerization, is an integer of 1 to 100.

The diisocyanate and monoisocyanate to be used as starting materials may be either aromatic or aliphatic. The diisocyanate and the monoisocyanate each may consist of only one or more aromatic isocyanates or only one or more aliphatic isocyanates, or may comprise a combination of one or more aromatic isocyanates and one or more aliphatic isocyanates. It is, however, preferred to use aromatic isocyanates. Namely, it is preferred that at least either of the diisocyanate and the monoisocyanate should comprise an aromatic isocyanate or consist of one or more aromatic isocyanates, or that each of the diisocyanate and the monoisocyanate should consist of one or more aromatic isocyanates. More preferred is the case in which the diisocyanate comprises a combination of an aliphatic isocyanate and an aromatic isocyanate and the monoisocyanate consists of one or more aromatic isocyanates. Especially preferred is the case in which the diisocyanate and the monoisocyanate each consist of one or more aromatic isocyanates.

Examples of diisocyanates usable in the invention include hexamethylene diisocyanate, dodecamethylene diisocyanate, 2,2,4-trimethylhexamethylene diisocyanate, 4,4'-dichlorohexylmethane diisocyanate, xylylene diisocyanate, tetramethylxylylene diisocyanate, isophorone diisocyanate, cyclohexyl diisocyanate, lysine diisocyanate, methylcyclohexane 2,4-diisocyanate, 4,4'-diphenylmethane diisocyanate, 4,4'-diphenyl ether diisocyanate, 2,6-tolylene diisocyanate, 2,4-tolylene diisocyanate, naphthalene diisocyanate, 1-methoxyphenyl 2,4-diisocyanate, 3,3'-dimethoxy-4,4'-diphenylmethane diisocyanate, 4,4'-diphenyl ether diisocyanate, 3,3'-dimethyl-4,4'-diphenyl ether diisocyanate, 2,2-bis[4-(4-isocyanatophenoxy)phenyl]-hexafluoropropane, 2,2-bis[4-(4-isocyanatophenoxy)-phenyl]propane, m-phenylene diisocyanate, 6-methoxy-2,4-phenylene diisocyanate, 5-bromo-2,4-tolylene diisocyanate, 3,3'-dichloro-4,4'-diphenylmethane diisocyanate, 3,3'-diphenyl-4,4'-diphenylmethane diisocyanate, 9,9-bis(4-isocyanatophenyl)fluorene, 9,9-bis(4-isocyanatophenyl)-3,6-dibromofluorene, 9,9'-bis(3-methyl-4-isocyanatophenyl)-3,6-dibromofluorene, 9,9-bis(3-phenyl-4-isocyanatophenyl)fluorene, 3,3',5,5'-tetraethyl-4,4'-diphenylmethane diisocyanate, 4,4'-diphenylisopropylidene diisocyanate, 4,4'-diphenyl ether diisocyanate, 4,4'-diphenyl sulfide diisocyanate, 4,4'-diphenyl sulfoxide diisocyanate, 3,3',5,5'-tetramethyl-4-4'-biphenyl diisocyanate, 3,3'-dimethoxy-4,4'-biphenyl diisocyanate, 3,3'-dibromo-4,4'-biphenyl diisocyanate, bis(4-(4-isocyanatophenoxy)phenyl)methane, 2,2-bis(4-(4-isocyanatophenoxy)phenyl)propane, bis(4-(4-isocyanatophenoxy)phenyl) ether, bis(4-(4-isocyanatophenoxy)phenyl) sulfide, and bis(4-(4-isocyanatophenoxy)phenyl) sulfone.

It is especially preferred to use, among those diisocyanates, at least one member selected from the group consisting of 4,4'-diphenylmethane diisocyanate, naphthalene diisocyanate, and 9,9-bis(4-isocyanatophenyl)fluorene.

Those diisocyanates can be used singly or as a mixture of two or more thereof.

Examples of monoisocyanates usable in the invention include phenyl isocyanate, p-nitrophenyl isocyanate, p- and m-tolyl isocyanates, p-formylphenyl isocyanate, p-isopropylphenyl isocyanate, and 1-naphthyl isocyanate.

More preferred of those monoisocyanates is 1-naphthyl isocyanate because this monoisocyanate does not react with itself and the terminal blocking of a polycarbodiimide proceeds efficiently.

Those monoisocyanates can be used singly or as a mixture of two or more thereof.

The amount of the monoisocyanate to be used for terminal blocking is preferably in the range of 1 to 10 mol per 100 mol of the diisocyanate ingredient to be used. When a monoisocyanate ingredient is used in an amount of 1 mol or larger per 100 mol of the diisocyanate ingredient, the polycarbodiimide obtained is less apt to have too high a molecular weight and to undergo a crosslinking reaction. Because of this, the polycarbodiimide solution, for example, is less apt to undergo an increase in viscosity, solidification, or a decrease in storage stability. Such monoisocyanate ingredient amounts are hence preferred. On the other hand, when a monoisocyanate ingredient is used in an amount of 10 mol or smaller per 100 mol of the diisocyanate ingredient, the resultant polycarbodiimide solution has an appropriate viscosity. Because of this, film formation from this solution through application and drying, for example, can be satisfactorily conducted. Such monoisocyanate ingredient amounts are hence preferred. Solutions of the polycarbodiimide obtained through terminal blocking with a monoisocyanate used in an amount within that range, in terms of the amount thereof relative to the diisocyanate ingredient amount, have highly excellent storage stability.

The polycarbodiimide to be used in the invention can be produced by converting one or more diisocyanates as a starting material to a carbodiimide through condensation reaction in a given solvent in the presence of a catalyst for carbodiimide formation and blocking the terminals of the resultant carbodiimide polymer with a monoisocyanate.

The diisocyanate condensation reaction is conducted at a temperature of generally 0 to 150°C, preferably 10 to 120°C.

In the case where an aliphatic diisocyanate and an aromatic diisocyanate are used in combination as starting-material diisocyanates, it is preferred to react the diisocyanates at a low temperature. The reaction temperature is preferably 0 to 50°C, more preferably 10 to 40°C. Use of a reaction temperature in this range is preferred because the condensation of the aliphatic diisocyanate with the aromatic diisocyanate proceeds sufficiently.

In the case where the excess aromatic diisocyanate present in the reaction mixture is desired to be further reacted with the polycarbodiimide formed from an aliphatic diisocyanate and an aromatic diisocyanate, the reaction temperature is preferably 40 to 150°C, more preferably 50 to 120°C. As long as the reaction temperature is within this range, any desired solvent can be used to smoothly conduct the reaction. That reaction temperature range is therefore preferred.

The diisocyanate concentration in the reaction mixture is preferably from 5 to 80% by weight. As long as the diisocyanate concentration is within this range, carbodiimide formation proceeds sufficiently and reaction control is easy. That diisocyanate concentration range is therefore preferred.

Terminal blocking with a monoisocyanate can be accomplished by adding the monoisocyanate to the reaction mixture in an initial, middle, or final stage of carbodiimide formation from the diisocyanate(s) or throughout the carbodiimide formation.

As the catalyst for carbodiimide formation, any of known phosphorus compound catalysts can be suitably used. Examples thereof include phospholene oxides such as 1-phenyl-2-phospholene 1-oxide, 3-methyl-2-phospholene 1-oxide, 1-ethyl-2-phospholene 1-oxide, 3-methyl-1-phenyl-2-phospholene 2-oxide, and the 3-phospholene isomers of these.

The solvent (organic solvent) to be used for producing the polycarbodiimide is a known one. Examples thereof include halogenated hydrocarbons such as tetrachloroethylene, 1,2-dichloroethane, and chloroform, ketone solvents such as acetone, methyl ethyl ketone, methyl isobutyl ketone, and cyclohexanone, cyclic ether solvents such as tetrahydrofuran and dioxane, and aromatic hydrocarbon solvents such as toluene and xylene. These solvents can be used singly or as a mixture of two or more thereof. These solvents may be used also for dissolving the polycarbodiimide obtained.

The end point of the reaction can be ascertained by infrared spectroscopy (IR analysis) from the occurrence of absorption attributable to the carbodiimide structure (N=C=N) (2,135 cm⁻¹) and the disappearance of absorption attributable to the isocyanate structure (N=C=O) (2,270 cm⁻¹).

After completion of the carbodiimide-forming reaction, a polycarbodiimide is obtained usually in the form of a solution. However, the solution obtained may be poured into a poor solvent such as methanol, ethanol, isopropyl alcohol or hexane to precipitate the polycarbodiimide, followed by removal of the unreacted monomers and the catalyst.

In preparing a solution of the polycarbodiimide which has been recovered as a precipitate, the precipitate is washed and dried in a given manner and then dissolved again in an organic solvent. By performing this operation, the polycarbodiimide solution can have further improved storage stability.

In the case where the polycarbodiimide solution contains by-products, the solution may be purified, for example, by adsorptively removing the by-products with an appropriate adsorbent. Examples of the adsorbent include alumina gel, silica gel, activated carbon, zeolites, activated magnesium oxide, activated bauxite, Fuller's earth, activated clay, and molecular sieve carbon. These adsorbents can be used singly or in combination of two or more thereof.

By the method described above, the polycarbodiimide to be used in the invention is obtained.

The phenolic compound contained in the resin composition for optical use of the invention is a compound which has a phenol framework and has a substituent at at least one of the ortho positions with respect to its phenolic hydroxyl group. The substituent is preferably an alkyl group bonded to the benzene ring through a quaternary carbon atom. Examples thereof include tert-butyl, tert-pentyl, and tert-octyl.

Examples of the phenolic compound include 2,6-ditert-butyl-4-methylphenol, 3,9-bis[2-{3-(3-tert-butyl-4-hydroxy-5-methylphenyl)propionyloxy}-1,1-dimethylethyl]-2,4,8,10-tetraoxaspiro[5.5]undecane, octadecyl 3-(3,5-ditert-butyl-4-hydroxyphenyl)propionate, 2,2'-methylenebis(6-tert-butyl-4-methylphenol), 2-tert-butyl-6-(3-tert-butyl-2-hydroxy-5-methylbenzyl)-4-methylphenyl acrylate, 2-[1-(2-hydroxy-3,5-di-tert-pentylphenyl)ethyl)-4,6-di-tert-pentylphenyl acrylate, 4,4'-butylidenebis(6-tert-butyl-3-methylphenol), 2-(3,5-di-tert-butyl-4-hydroxyanilino)-4,6-bis(n-octylthio)-1,3,5-triazine, 2,2'-ethylidenebis(4,6-di-tert-butylphenol), 2,2'-ethylidenebis(4-sec-butyl-6-tertbutylphenol), 1,1,3-tris(5-tert-butyl-4-hydroxy-2-methylphenyl)butane, bis[2-tert-butyl-4-methyl-6-(3-tert-butyl-2-hydroxy-5-methylbenzyl)phenyl] terephthalate, tetrakis[methylene 3-(3,5-di-tert-butyl-4-hydroxyphenyl)propionate]methane, 2,2'-thiodiethylene bis[3-(3,5-di-tert-butyl-4-hydroxyphenyl)propionate], triethylene glycol bis[3-(3-tert-butyl-4-hydroxy-5-methylphenyl)propionate], 1,6-hexanediol bis[3-(3,5-di-tert-butyl-4-hydroxyphenyl)propionate], 1,3,5-tris(3,5-di-tert-butyl-4-hydroxybenzyl) isocyanurate, 1,3,5-tris[2-{3-(3,5-di-tert-butyl-4-hydroxyphenyl)propionyloxy}ethyl] isocyanurate, 1,3,5-tris(4-tert-butyl-3-hydroxy-2,6-dimethylbenzyl) isocyanurate, and 1,3,5-tris(3,5-di-tert-butyl-4-hydroxybenzyl)-2,4,6-trimethylbenzene. Preferred of these is 3,9-bis[2-{3-(3-tert-butyl-4-hydroxy-5-methylphenyl)propionyloxy}-1,1-dimethylethyl)-2,4,8,10-tetraoxaspiro[5.5]undecane or 2,6-di-tert-butyl-4-methylphenol. These phenolic compounds can be used singly or as a mixture of two or more thereof.

The content of the phenolic compound in the resin composition for optical use of the invention is preferably 0.01 to 1 part by weight, more preferably 0.01 to 0.5 parts by weight, per 100 parts by weight of the polycarbodiimide from the standpoint of further enhancing the storage stability of the polycarbodiimide solution.

The resin composition for optical use of the invention can be prepared by mixing the above-described polycarbodiimide solution with the phenolic compound.

The resin composition for optical use of the invention can be used, for example, in a sheet form. Use of the sheet-form resin does not necessitate molds and large apparatus which have been necessary so far, and the sheet can be appropriately used just in a necessary amount. Use of the sheet-form resin hence generates little material waste and is highly excellent from the standpoint of economical efficiency. For the foregoing reason, the invention further provides a resin sheet for optical use.

The resin sheet for optical use of the invention can be obtained from the resin composition for optical use which has been obtained by mixing the polycarbodiimide solution with the phenolic compound, by forming the resin composition into a film having an appropriate thickness by a known technique such as, e.g., casting, spin coating, or roll coating. The film (sheet) formed is usually dried at a temperature necessary for solvent removal. Namely, the sheet is dried at a temperature regulated to preferably 20 to 350°C, more preferably 50 to 200°C, in order to dry the sheet without causing a curing reaction to proceed. Drying temperatures not lower than 20°C are preferred because the sheet obtained through drying at such a temperature contains no residual solvent and has high reliability. On the other hand, drying temperatures not higher than 350°C are preferred because the sheet can be sufficiently dried while being inhibited from thermally curing. The drying period is preferably 0.5 to 10 minutes, more preferably 0.5 to 3 minutes. The thickness of the resin sheet for optical use of the invention is preferably from 25 to 500 µm, more preferably 50 to 300 µm, from the standpoint of convenience of use.

The invention furthermore provides an optical semiconductor device obtained by encapsulating one or more optical semiconductor elements with the resin composition for optical use or the resin sheet for optical use.

The encapsulation of an optical semiconductor element is accomplished by covering the optical semiconductor element with the resin composition for optical use or resin sheet for optical use of the invention and curing the resin composition or resin sheet.

Examples of the optical semiconductor device obtained by encapsulating one or more optical semiconductor elements with the resin composition for optical use or resin sheet for optical use of the invention include light-emitting diodes.

The optical semiconductor device of the invention can be produced using materials and methods known in this field, except that the resin composition for optical use or resin sheet for optical use of the invention is used as an encapsulating resin.

### EXAMPLES

The invention will be illustrated in greater detail with reference to the following Examples, but the invention should not be construed as being limited thereto.

In the following Examples, all the synthesis reactions were conducted in a nitrogen stream. IR analysis was made with FT/IR-230 (manufactured by JEOL Ltd.).

### PRODUCTION EXAMPLE 1

### Preparation of Polycarbodiimide Solution A:

Into a 500-mL four-necked flask equipped with a stirrer, dropping funnel, reflux condenser, and thermometer were introduced 98.85 g (395 mmol) of 4,4'-diphenylmethane diisocyanate and 197.19 g of cyclohexanone. These ingredients were mixed together. Thereto were added 4.01 g (23.7 mmol) of 1-naphthyl isocyanate and 0.38 g (1.975 mmol) of 3-methyl-1-phenyl-2-phospholene 2-oxide. The resultant mixture was heated to 80°C and held for 2 hours with stirring.

The progress of reactions was ascertained by IR analysis. Specifically, the decrease in the amount of absorption by N=C=O stretching vibration attributable to the isocyanates (2,270 cm⁻¹) and the increase in the amount of absorption by N=C=N stretching vibration attributable to carbodiimide (2,135 cm⁻¹) were followed. After the end point of the reactions was ascertained by IR analysis, the reaction mixture was cooled to room temperature. Thus, polycarbodiimide solution A was obtained. In this polycarbodiimide solution A, the polycarbodiimide was one represented by general formula (1) wherein n was 100.

### PRODUCTION EXAMPLE 2

### Preparation of Polycarbodiimide Solution B:

Into a 500-mL four-necked flask equipped with a stirrer, dropping funnel, reflux condenser, and thermometer were introduced 98.85 g (395 mmol) of 4,4'-diphenylmethane diisocyanate and 197.18 g of cyclohexanone. These ingredients were mixed together. Thereto were added 10.02 g (59.25 mmol) of 1-naphthyl isocyanate and 0.38 g (1.975 mmol) of 3-methyl-1-phenyl-2-phospholene 2-oxide. The resultant mixture was heated to 80°C and held for 2 hours with stirring.

After the end point of the reactions was ascertained in the same manner as in Production Example 1, the reaction mixture was cooled to room temperature. Thus, polycarbodiimide solution B was obtained. In this polycarbodiimide solution B, the polycarbodiimide was one represented by general formula (1) wherein n was 48.

### PRODUCTION EXAMPLE 3

### Preparation of Polycarbodiimide Solution C:

Into a 500-mL four-necked flask equipped with a stirrer, dropping funnel, reflux condenser, and thermometer were introduced 68.32 g (273 mmol) of 4,4'-diphenylmethane diisocyanate, 36.44 g (91 mmol) of 9,9-bis(4-isocyanatophenyl)fluorene, and 191.38 g of cyclohexanone. These ingredients were mixed together. Thereto were added 3.69 g (21.84 mmol) of 1-naphthyl isocyanate and 0.35 g (1.82 mmol) of 3-methyl-1-phenyl-2-phospholene 2-oxide. The resultant mixture was heated to 80°C and held for 2 hours with stirring.

After the end point of the reactions was ascertained in the same manner as in Production Example 1, the reaction mixture was cooled to room temperature. Thus, polycarbodiimide solution C was obtained. In this polycarbodiimide solution C, the polycarbodiimide was one represented by general formula (1) wherein n was 59.

### PRODUCTION EXAMPLE 4

### Preparation of Polycarbodiimide Solution D:

Into a 500-mL four-necked flask equipped with a stirrer, dropping funnel, reflux condenser, and thermometer were introduced 74.14 g (296.25 mmol) of 4,4'-diphenylmethane diisocyanate, 39.54 g (98.75 mmol) of 9,9-bis(4-isocyanatophenyl)fluorene, and 176.35 g of cyclohexanone. These ingredients were mixed together. Thereto were added 10.02 g (59.25 mmol) of 1-naphthyl isocyanate and 0.38 g (1.975 mmol) of 3-methyl-1-phenyl-2-phospholene 2-oxide. The resultant mixture was heated to 80°C and held for 2 hours with stirring.

After the end point of the reactions was ascertained in the same manner as in Production Example 1, the reaction mixture was cooled to room temperature. Thus, polycarbodiimide solution D was obtained. In this polycarbodiimide solution D, the polycarbodiimide was one represented by general formula (1) wherein n was 39.

### PRODUCTION EXAMPLE 5

### Preparation of Polycarbodiimide Solution E:

Into a 500-mL four-necked flask equipped with a stirrer, dropping funnel, reflux condenser, and thermometer were introduced 15.88 g (91.2 mmol) of tolylene diisocyanate (isomer mixture; T-80, manufactured by Mitsui-Takeda Chemical), 50.21 g (200.46 mmol) of 4,4'-diphenylmethane diisocyanate, 34.5 g (164.16 mmol) of naphthalene diisocyanate, and 194.39 g of cyclohexanone. These ingredients were mixed together. Thereto were added 4.63 g (27.36 mmol) of 1-naphthyl isocyanate and 0.44 g (2.28 mmol) of 3-methyl-1-phenyl-2-phospholene 2-oxide. The resultant mixture was heated to 80°C and held for 2 hours with stirring.

After the end point of the reactions was ascertained in the same manner as in Production Example 1, the reaction mixture was cooled to room temperature. Thus, polycarbodiimide solution E was obtained. In this polycarbodiimide solution E, the polycarbodiimide was one represented by general formula (1) wherein n was 64.

### PRODUCTION EXAMPLE 6

### Preparation of Polycarbodiimide Solution F:

Into a 500-mL four-necked flask equipped with a stirrer, dropping funnel, reflux condenser, and thermometer were introduced 18.04 g (103.6 mmol) of tolylene diisocyanate (isomer mixture; T-80, manufactured by Mitsui-Takeda Chemical), 57.04 g (227.92 mmol) of 4,4'-diphenylmethane diisocyanate, 39.20 g (186.48 mmol) of naphthalene diisocyanate, and 172.31 g of cyclohexanone. These ingredients were mixed together. Thereto were added 13.15 g (77.7 mmol) of 1-naphthyl isocyanate and 0.50 g (2.59 mmol) of 3-methyl-1-phenyl-2-phospholene 2-oxide. The resultant mixture was heated to 80°C and held for 2 hours with stirring.

After the end point of the reactions was ascertained in the same manner as in Production Example 1, the reaction mixture was cooled to room temperature. Thus, polycarbodiimide solution F was obtained. In this polycarbodiimide solution F, the polycarbodiimide was one represented by general formula (1) wherein n was 36.

### EXAMPLES 1 TO 12

### Preparation of Resin Compositions for Optical Use:

To each of polycarbodiimide solutions A to F obtained in Production Examples 1 to 6 was added 3,9-bis[2-{3-(3-tert-butyl-4-hydroxy-5-methylphenyl)propionyloxy}-1,1-dimethylethyl]-2,4,8,10-tetraoxaspiro[5.5]undecane (hereinafter referred to as phenolic compound A) or 2,6-di-tert-butyl-4-methylphenol (hereinafter referred to as phenolic compound B) in an amount of 0.5 parts by weight per 100 parts by weight of the polycarbodiimide. The ingredients were mixed together. Thereafter, each mixture was diluted with cyclohexanone so as to result in a polycarbodiimide concentration of 10% by weight. Thus, resin compositions for optical use were prepared (Table 1).

### COMPARATIVE EXAMPLES 1 TO 6

### Preparation of Resins for Optical Use:

Polycarbodiimide solutions A to F obtained in Production Examples 1 to 6 each was diluted with cyclohexanone so as to result in a polycarbodiimide concentration of 10% by weight. Thus, resins for optical use were prepared (Table 1).

**Table 1**

| | | Polycarbodiimide solution used | Phenolic compound used |
|---|---|---|---|
| Example No. | 1 | A | A |
| | 2 | B | A |
| | 3 | C | A |
| | 4 | D | A |
| | 5 | E | A |
| | 6 | F | A |
| | 7 | A | B |
| | 8 | B | B |
| | 9 | C | B |
| | 10 | D | B |
| | 11 | E | B |
| | 12 | F | B |
| Comparative Example No. | 1 | A | - |
| | 2 | B | - |
| | 3 | C | - |
| | 4 | D | - |
| | 5 | E | - |
| | 6 | F | - |

### TEST EXAMPLE 1

### Storage Stability Test:

The resin compositions for optical use obtained in Examples 1 to 12 and the resins for optical use obtained in Comparative Examples 1 to 6 were stored at 25°C and examined for viscosity changes with an E-type viscometer (VISCONIC Type ED, manufactured by Tokyo Keiki Co., Ltd.). The results obtained are shown in Table 2.

**Table 2**

| | | Number of days required for 10% viscosity increase | Number of days required for 30% viscosity increase | Number of days required for gelation |
|---|---|---|---|---|
| Example No. | 1 | 7 | 24 | 31 |
| | 2 | 10 | 27 | 36 |
| | 3 | 9 | 28 | 41 |
| | 4 | 14 | 31 | 48 |
| | 5 | 10 | 22 | 30 |
| | 6 | 11 | 25 | 34 |
| | 7 | 3 | 18 | 24 |
| | 8 | 6 | 21 | 31 |
| | 9 | 7 | 20 | 30 |
| | 10 | 11 | 19 | 30 |
| | 11 | 7 | 19 | 27 |
| | 12 | 9 | 23 | 28 |
| Comparative Example No. | 1 | 1 | 7 | 10 |
| | 2 | 3 | 10 | 24 |
| | 3 | 3 | 10 | 20 |
| | 4 | 5 | 10 | 22 |
| | 5 | - | - | 1 |
| | 6 | 1 | 7 | 10 |

The results given in Table 2 show that compared to the resins for optical use of the Comparative Examples, the resin compositions for optical use of the Examples were clearly inhibited from suffering a viscosity increase and had excellent storage stability.

According to the invention, a resin composition for optical use which is superior in storage stability to optical resins heretofore in use is provided. The resin composition can hence contribute greatly to improvements in the efficiency of production of optical semiconductor devices.

While the present invention has been described in detail and with reference to specific embodiments thereof, it will be apparent to one skilled in the art that various changes and modifications can be made therein without departing from the spirit and scope thereof.

This application is based on Japanese Patent Application No. 2004-300681 filed October 14, 2004, the contents thereof being herein incorporated by reference.

## Claims

1. A resin composition for optical use which comprises a phenolic compound and a polycarbodiimide represented by the following general formula (1): 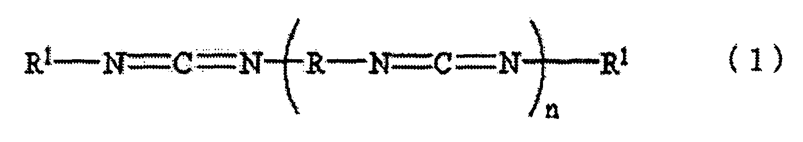 wherein R represents a diisocyanate residue, R¹ represents a monoisocyanate residue, and n is an integer of 1 to 100,
wherein the phenolic compound has a substituent at at least one of the ortho positions with respect to its phenolic hydroxyl group.

2. The resin composition for optical use of claim 1, wherein the substituent is an alkyl group.

3. The resin composition for optical use of claim 1 or 2, wherein the phenolic compound is present in an amount of 0.01 to 1 part by weight per 100 parts by weight of the polycarbodiimide.

4. The resin composition for optical use of any one of claims 1 to 3, wherein the phenolic compound is 3,9-bis[2-{3-(3-tert-butyl-4-hydroxy-5-dimethylethyl]-2,4,8,10-tetraoxaspiro[5.5]undecane and/or 2,6-di-tert-butyl-4-methylphenol.

5. The resin composition for optical use of any one of claims 1 to 4, wherein the diisocyanate residue represented by R of general formula (1) is an aromatic diisocyanate residue.

6. The resin composition for optical use of any one of claims 1 to 5, wherein the monoisocyanate residue represented by R¹ of general formula (1) is an aromatic monoisocyanate residue.

7. A resin sheet for optical use obtained by forming the resin composition for optical use of any one of claims 1 to 6 into a sheet form.

8. An optical semiconductor device produced by encapsulating one or more optical semiconductor elements with the resin composition for optical use of any one of claims 1 to 6.

9. An optical semiconductor device produced by encapsulating one or more optical semiconductor elements with the resin sheet for optical use of claim 7.
